(19) **Europäisches Patentamt / European Patent Office / Office européen des brevets**

(11) **EP 2 245 592 B1**

(12) **EUROPEAN PATENT SPECIFICATION**

(45) Date of publication and mention
of the grant of the patent:
**27.03.2013 Bulletin 2013/13**

(21) Application number: **09701915.2**

(22) Date of filing: **07.01.2009**

(51) Int Cl.:
***G06T 7/00*** (2006.01)

(86) International application number:
**PCT/IB2009/050041**

(87) International publication number:
**WO 2009/090572 (23.07.2009 Gazette 2009/30)**

(54) **IMAGE REGISTRATION ALIGNMENT METRIC**

BILDERFASSUNGS- UND AUSRICHTUNGSMETRIK

MÉTRIQUE D'ALIGNEMENT DE SUPERPOSITION D'IMAGE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **18.01.2008 US 22019**

(43) Date of publication of application:
**03.11.2010 Bulletin 2010/44**

(73) Proprietor: **Koninklijke Philips Electronics N.V.
5621 BA Eindhoven (NL)**

(72) Inventors:
• **ZHAO, Zuo
Cleveland
Ohio 44143 (US)**
• **SHAO, Lingxiong
Cleveland
Ohio 44143 (US)**
• **YE, Jinghan
Cleveland
Ohio 44143 (US)**
• **SONG, Xiyun
Cleveland
Ohio 44143 (US)**

(74) Representative: **Van Velzen, Maaike Mathilde et al
Philips
Intellectual Property & Standards
P.O. Box 220
5600 AE Eindhoven (NL)**

(56) References cited:
• **KESSLER M. L.: "Image registration and data
fusion in radiation therapy" THE BRITISH
JOURNAL OF RADIOLOGY, vol. 79, 2006, pages
S99-S108, XP005050049 ISSN: 0167-8140**
• **WIERZBICKI M ET AL: "Validation of dynamic
heart models obtained using non-linear
registration for virtual reality training, planning,
and guidance of minimally invasive cardiac
surgeries" MEDICAL IMAGE ANALYSIS,
OXFORD UNIVERSITY PRESS, OXOFRD, GB, vol.
8, no. 3, 1 September 2004 (2004-09-01), pages
387-401, XP004533595 ISSN: 1361-8415**
• **STURM B. ET AL.: "Registration of 3D CT
angiography and cardiac MR images in coronary
artery disease patients" THE INTERNATIONAL
JOURNAL OF CARDIOVASCULAR IMAGING, vol.
19, 2003, pages 281-293, XP002534949 Kluwer
Academic Press**
• **MAINTZ J B A ET AL: "A SURVEY OF MEDICAL
IMAGE REGISTRATION" MEDICAL IMAGE
ANALYSIS, OXFORDUNIVERSITY PRESS,
OXFORD, GB, vol. 2, no. 1, 1 January 1998
(1998-01-01), pages 1-37, XP001032679 ISSN:
1361-8423**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present application generally relates to registering images generated from data acquired by different imaging modalities. While it is described with particular application to a single photon emission compute tomography / computer tomography (SPECT / CT) system, it also relates to other medical and non-medical imaging applications.

Hybrid multi-modality imaging systems include SPECT/CT, PET/CT and PET/MRI systems. A hybrid multi-modality registering system is presented in an article by KESSLER M.L.: "Image registration and data fusion in radiation therapy", THE BRITISH JOURNAL OF RADIOLOGY, vol. 79, 2006, pages S99-S108, XP005050049 ISSN:0167-8140. Conventionally, with such hybrid systems data is sequentially acquired in that first data is acquired with one of the modalities and then second data is acquired with the other modality. As a consequence, the images generated with the first and second data may have some degree of mechanical misalignment. Even if the mechanical misalignment can be corrected, there may be misalignment due to the motion of the patient or the movement of physiological tissue such as an organ from scan to scan.

By way of example, the relative position of the heart in the body is a function of the respiratory cycle. In the case of a cardiac SPECT/CT system, a CT scan acquires data within seconds or less. As such, the CT scan can be considered as a snapshot of the respiratory cycle. However, the SPECT scan acquires data over a relatively longer period of time relative to the CT scan. As such, the SPECT scan can be considered as an average over the respiratory cycle. A consequence of the different acquisition times is that the resulting CT and SPECT images may not align with respect to the cardiac region. The literature has reported misalignment in the cardiac region ranging from zero (0) to twenty-four (24) millimeters (mm) in the head-to-foot or longitudinal direction. Unfortunately, such misalignment may result in false positives in CT-based attenuation corrected SPECT data or localization errors. The literature has also noted methods that attempt to improve the misalignment between CT and SPECT or CT and PET in the cardiac area. However, such methods generally do not provide a good clinical solution.

As a result, clinicians have visually inspected the registration of two images before making a clinical diagnostic decision or performing other tasks, such as attenuation correcting (AC) data in the case of SPECT/CT and PET/CT. In one instance, the clinician browses through multiple orthogonal views to inspect the misalignment in different slices, and moves the images, if necessary, to correct for misalignment. Such manual inspection and correction may be time consuming and tedious. Conventionally, the clinician manually aligns the CT heart data with the non-AC SPECT heart data, and then CT-AC is performed on the SPECT data. A consequence of such alignment approach is that other tissue may not be appropriately registered, and artifacts may be introduced into the data after the CT-AC.

Aspects of the present application address the above-referenced matters and others.

According to one aspect, a method includes obtaining a combined data set that includes first and second imaging data sets. The first and second imaging data sets correspond to different imaging modalities. The method further includes determining a metric indicative of an alignment between the first and second imaging data sets in the combined data set. The method further includes presenting the metric in a human readable format. The method further includes segmenting the first data set, based on tissue of interest, to generate a first segmented region that includes the tissue of interest. The method also includes identifying a first set of voxels, in the segmented data set, that have first values that correspond to the tissue of interest. Moreover, the method includes determining a first number of voxels in the first set of voxels, identifying a second set of voxels, in the second data set, that correspond to the first voxels, determining a second number of voxels in the second set of voxels that have second values that correspond to the tissue of interest, and determining the metric based on the first and second number of voxels.

In another aspect, a system includes a data combiner that combines first and second imaging data sets. The first and second imaging data sets correspond to different imaging modalities. A metric determining component determines a metric indicative of an alignment between the first and second imaging data sets in the combined data set. A registration component registers the first and second imaging data sets when the metric is indicative of an unacceptable alignment between the first and second imaging data sets. A segmentation component segments the first data set, based on tissue of interest, to generate a first segmented region that includes the tissue of interest. A voxels counter counts a first number of voxels in a first set of voxels in the segmented data set that have first values that correspond to the tissue of interest and that counts a second number of voxels in a second set of voxels in the second data set that both correspond to the first voxels and have second values that correspond to the tissue of interest, wherein the metric is based on the first and second number of voxels.

In another aspect, a computer readable storage medium containing instructions which, when executed by a computer, cause the computer to perform the steps of: determining a metric indicative of an alignment between first imaging data fused with second imaging data; and registering the first and second imaging data when the metric is indicative of an unacceptable alignment between the first and second imaging data sets, wherein the instructions, when executed by the computer, further cause the computer to perform the steps of: segmenting the first data, based on tissue of interest, to generate a first segmented region that includes the tissue of interest, and determining a number of voxels in a first set of voxels in the segmented data set that have first values that correspond to the tissue of interest; and a second number of voxels in a second set of voxels in the second data set that both correspond to the first set of voxels and have second values that correspond to the tissue of interest, wherein the metric is based on the first and second number of voxels in the first and second sets of voxels.

Still further aspects of the present invention will be appreciated to those of ordinary skill in the art upon reading and understand the following detailed description.

The invention may take form in various components and arrangements of components, and in various steps and arrangements of steps. The drawings are only for purposes of illustrating the preferred embodiments and are not to be construed as limiting the invention.

FIGURE 1 illustrates an exemplary hybrid medical imaging system.

FIGURE 2 illustrates an example technique for determining a quality metric for tissue of interest in superimposed data sets.

FIGURE 3 illustrates another example technique for determining a quality metric for tissue of interest in superimposed data sets.

FIGURE 4 illustrates an example of misalignment between SPECT and CT data in the myocardium.

FIGURE 5 illustrates an example of registered SPECT and CT data of the myocardium.

FIGURE 6 illustrates a flow chart.

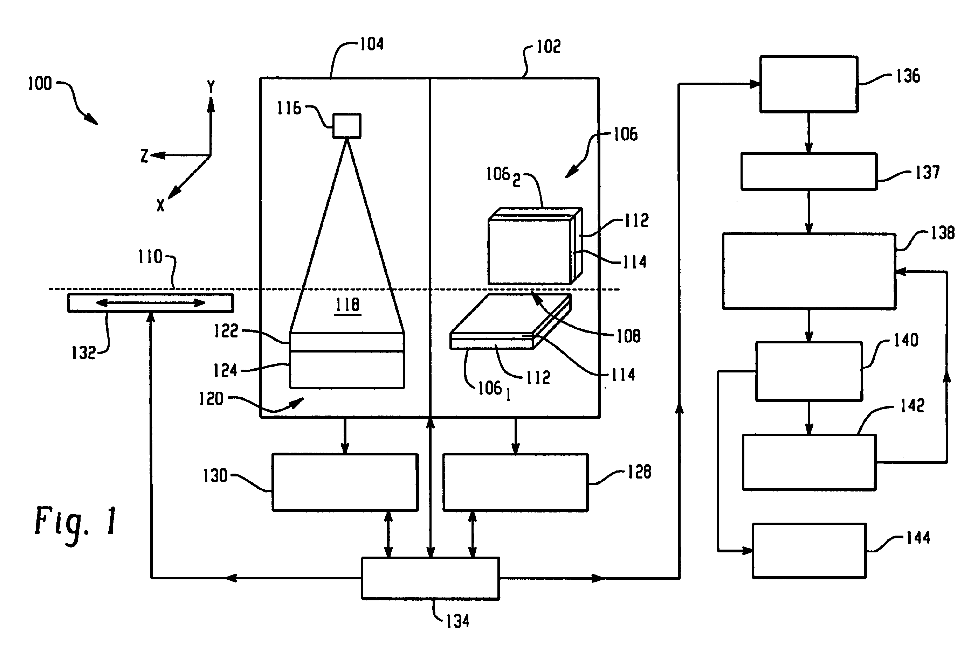

FIGURE 1 illustrates an imaging system 100 that includes a single photon emission computed tomography (SPECT) portion 102 and a computed tomography (CT) portion 104. As shown, the portions 102 and 104 are part of a single hybrid scanner. However, in another instance the portions 102 and 104 are respectively part of separate scanners, which can be located proximate or remote from each other. In another instance, the system 100 includes a gantry that includes both x-ray detectors and SPECT detectors. In other embodiments, the medical imaging system may alternatively or additionally include a positron emission tomography (PET) portion and/or a magnetic resonance (MR) portion.

The SPECT portion 102 includes at least one gamma radiation sensitive detector 106. Two gamma radiation sensitive detectors $106_1$ and $106_2$ are show in the illustrated example. The gamma radiation sensitive detectors 106 are disposed relative to each other at an angle in the range of roughly ninety (90) degrees to one hundred and two (102) degrees. Other angles are also contemplated. The gamma radiation sensitive detectors 106 are configured to rotate around a SPECT examination region 108 and about a longitudinal or z-axis 110 to acquire projections for plurality of projection angles or views.

Each of the illustrated gamma radiation sensitive detectors 106 includes a two-dimensional array of photosensors 112 and a scintillator 114 in optical communication with the two-dimensional array of photosensors 112. The scintillator 114 receives gamma radiation from radionuclide decay occurring in the SPECT examination region 108 and produces photons in response thereto. The photosensors 112 generate electrical signals indicative of the detected gamma radiation.

The CT portion 104 includes an x-ray radiation source 116, such as an x-ray tube, that rotates about a CT examination region 118. In another embodiment, the x-ray radiation source 116 is stationary. The radiation source 116 emits x-ray radiation that traverses the CT examination region 118. A radiation sensitive detector 120 subtends an angular arc opposite the examination region 118 with respect to the radiation source 116. The radiation sensitive detector 120 may rotate in coordination with the x-ray radiation source 116 as in a third generation system, or remain stationary as in a fourth generation system, or any other x-ray (CT) system configuration.

The radiation sensitive detector 120 includes a two-dimensional array of photosensors 124 and a scintillator 122 in optical communication with the two-dimensional array of photosensors 124. The scintillator 122 receives x-ray radiation traversing the CT examination region 118 and produces photons in response thereto. The photosensors 124 generate electrical signals indicative of the detected x-ray radiation.

A SPECT reconstructor 128 reconstructs the SPECT projections to generate volumetric image data indicative of the SPECT examination region 108, based on the detected gamma radiation. This may include reconstructing concurrently acquired data for different energy windows, including different primary radiation energy windows and/or a scatter radiation energy window.

A CT reconstructor 130 reconstructs the CT projections to generate volumetric image data indicative of the CT examination region 118, based on the detected x-ray radiation.

An object support 132 supports an object, such as a human patient, luggage, etc., to be imaged. The object support 132 is configured to longitudinally move in coordination with operation of the system 100 so that an object can be scanned at a plurality of longitudinal locations by either or both of the SPECT and CT portions 102 and 104 according to desired scanning trajectories. With the illustrated system 100, the SPECT and CT portions 102 and 104 are located in close proximity (as shown) with their respective examination regions 108 and 118 disposed along the common z-axis 110.

A computer serves an operator console 134. The console 134 includes a human readable output device such as a monitor or display and input devices such as a keyboard and mouse. Software resident on the console 134 allows the operator to view and otherwise manipulate the volumetric image data, for example, through a graphical user interface (GUI). Software resident on the console 134 also allows the operator to control the operation of the system 100 by establishing desired scan protocols, initiating and terminating scans, and otherwise interacting with the scanner 100.

A data combiner 136 combines the SPECT and CT data. In one instance, this includes re-sampling the CT data into SPECT space. For example, the CT data may be converted into an attenuation map with a substantially same voxel size and resolution as the SPECT data. Other re-sampling is also contemplated. It is to be appreciated that the data in the combined set may be registered via a rigid registration or a non-rigid registration, or not registered.

A pre-processor 137 suitably processes the combined data. As described in greater detail below, this may include segmenting one or more of the combined data sets, contouring one or more of the combined data sets, and/or otherwise processing one or more the combined data sets.

An alignment metric determining component 138 determines a first metric or figure of merit indicative of the alignment (or misalignment) of information in the combined data. As described in greater detail below, the metric may be a similarity metric indicative of the similarity between information in the combined SPECT data and the CT data. A second metric or figure of merit may be generated based on the alignment metric. The second metric may be indicative of an estimated distance (e.g., two (2) millimeters) between regions of interest in the combined data. One or both metrics may be presented, for example, via the console 134 or otherwise. As a result, an operator may be informed as to the degree of alignment between the information in the data sets in the combined data.

A decision component 140 determines whether the combined data should be registered or registered again (e.g., when the data sets have already been registered, but the registration for a region or tissue of interest is less than desirable) based on the first and/or second metrics. This may be done automatically and/or based on operator input. As noted above, these metrics are indicative of the degree of alignment between the information in the combined data sets. As such, a human operator and/or executing software can use the metric to determine whether the combined data should be registered. In addition, the operator can selectively browse through and/or otherwise process (e.g., manually or automatically register) the combined data based on the metric.

A registration component 142 registers or performs a secondary registration (where the data is already registered) when it is determined that the combined data sets should be registered based on the first and/or second metrics. After such a registration, the alignment metric determining component 138 determines the metrics for the newly registered data, and the decision component 140 again determines whether another registration should be performed.

When it is determined that another registration need not be performed, a processing component 144 further processes the combined SPECT and CT data or the registered combined SPECT and CT data, for example, by attenuation correcting the SPECT data based on the CT data and/or otherwise.

Although FIGURE 1 shows the console 134 in connection with the SPECT and CT portions 102 and 104 and the portions 136-144, it is to be appreciated that one or more of the processing portions 136-144 may be part of and/or performed in a different computer, such as a dedicated workstation, a general purpose computer or other computer.

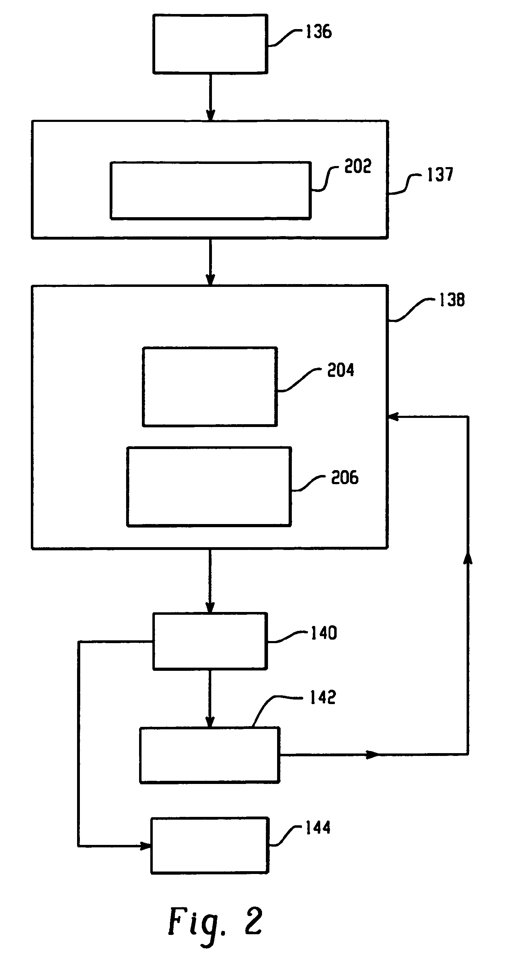

FIGURE 2 illustrates an example embodiment. The example is discussed in relation to non-cardiac SPECT/CT. However, cardiac SPECT/CT and/or other applications are also contemplated.

As discussed above, the SPECT and CT data are combined via the data combiner 136, which may include re-sampling the CT data into SPECT space, and the combined data sets may or may not be registered.

A contour identifying component 202 of the pre-processor 137 identifies a contour of tissue of interest, such as an anatomical organ, in both the SPECT data and the CT data. For the SPECT data, the contour may be identified in the volume of data reconstructed from SPECT primary or scatter data.

A similarity determining component 204 of the alignment metric determining component 138 determines a similarity metric between the contours. In the illustrated embodiment, the similarity metric is a distance metric such as a Euclidean distance between the contours. Equation 1 below illustrates an example approach for computing the Euclidean distance, normalized by the total number of voxels, between the voxels of the contours.

$$\text{Equation 1:} \qquad D_3 = \sum_i \sqrt{(x_{i1} - x_{i0})^2 + (y_{i1} - y_{i0})^2 + (z_{i1} - z_{i0})^2} \,,$$

where $D_3$ represents the Euclidian distance, i represents the total number of voxels, $x_{i1}$, $y_{i1}$ and $z_{i1}$ represent the coordinates of the voxels of either the SPECT or the CT data, and $x_{i0}$, $y_{i0}$ and $z_{i0}$ represent the coordinates of the voxels of the other SPECT or the CT data.

It is to be appreciated that distance metric may alternatively be performed in two-dimensional space based on the pixels of the contours. In other embodiments, the similarity metric may be based on cross-correlation, a root mean square deviation, mutual information, normalized mutual information, entropy, entropy correlation coefficient, and/or other information. It is also to be appreciated that the similarity metric may be determined based on an exhaustive, stochastic, Gauss-Newton, etc. approach.

A clinical metric generating component 206 generates a second metric based on the similarity value. The second metric may be indicative of an estimated real distance between regions of interest in the combined data, and may also include a relative directional component with respect to one of the data sets or some other defined reference. In one instance, the second metric may indicate that two regions of interest, one from one of the combined data sets and one from the other one of the combined data sets, are misaligned by about X millimeters or other units describing how far apart the regions of interest are with respect to the current registration, wherein X is a real number. As such, the second metric is a clinically relevant metric that can be used in an iterative manner to help the clinician provide for a good registration.

It is to be appreciated that the second metric may be variously determined. For example, a mapping between the similarity value and the second metric may be provided via a look up table. In another example, the second metric may be dynamically determined via a polynomial or other equation. In another example, the second metric is determined without the similarity value, for example, directly or otherwise from the combined data. In one embodiment, the clinical metric generating component 206 is omitted.

The illustrated decision component 140 determines whether the SPECT and CT data are to be registered or not. As briefly noted above, the decision component 140 may use operator input when rendering the decision. For example, the similarity metric and/or the clinical metric may be presented to the operator, for instance, via the console 134 and/or other output device. An operator or other input (including lack of an input) is then used by the decision component 140 to determine whether the SPECT and CT data are registered. In another embodiment, the decision component 140 makes the decision without any operator input. Other information such as a similarity threshold value, a clinical distance threshold value, a recommendation, etc. that may be useful for making such a determination may also be presented to the operator. A suitable threshold may be pre-determined based on manually moving the transmission map with different amounts of misalignments in one or more data sets and verifying the alignment from known data. Machine learning techniques including implicitly and explicitly trained classifiers and the like may also be employed.

When it is determined that the combined data sets do not need to be registered, the combined data can be further processed by the processing component 144.

Otherwise, the combined data registered via the registration component 142. In the illustrated example, the registration component 142 performs a volume preserving registration, such as a rigid registration. Such a registration may include translation between data sets in one or more spatial directions including, one (1), two (2) or three (3) spatial directions. By way of example, the combined data may be presented via the console 134 and/or other output device to operator, who manually and interactively translates either the SPECT or the CT data with respect to the other data. While translating the data, the operator can visually assess the overlap of the data, for example, from one or more coronal, sagittal, and/or transaxial views. In addition, the similarly metric can be dynamically updated and presented to the operator to facilitate registration as the data sets are moved relative to each other. The rigid registration may also include a rotational component, and/or an elastic registration is also contemplated.

Alternatively, an automatic registration is used. In one instance, the general principle may be to find the spatial transformation between the data sets that renders a highest spatial correlation between the data sets. This may be achieved through an optimization algorithm, an exhaustive search throughout all transformation parameters, and/or otherwise. The automatic registration may be configured to identify a first maxima, which may be an absolute or a local maxima, or the absolute maxima. Various constraints may also be used. For example, it may be assumed that the displacement in each direction could be no larger than a pre-set number of centimeters. The result of the automatic registration may be presented to the operator for approval, further registration, or rejection.

After registration, a new similarity and/or clinical metric are determined, and another decision is made as to whether the combined data sets should again be registered or not.

In an alternative approach, the similarly metric may be determined by first converting the CT images to an attenuation map. Then, the SPECT data can be reconstructed using the generated attenuation map. During the reconstruction, after the forward projection, the calculated projection data is compared with the measured data. A similarity metric can then be computed as discussed herein, for example, via a Euclidian distance, mutual information, normalized mutual information, cross-correlation, entropy correlation coefficient. The similarity threshold can be pre-derived from simulation studies or real clinical data sets.

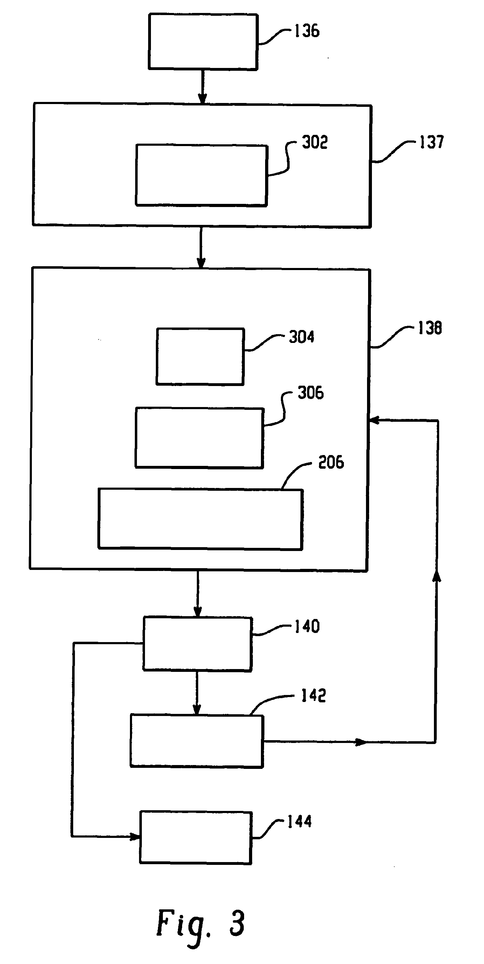

FIGURE 3 illustrates an example embodiment. The example is discussed in relation to cardiac SPECT/CT. However, non-cardiac SPECT/CT and/or other applications are also contemplated. Again, the combined data sets may or may not be registered.

In this example, after the SPECT and CT data are combined, a segmentation component 302 of the pre-processor 137 segments tissue of interest from the SPECT data. It is to be appreciated that an automatic and/or manual segmentation can be used. Where the tissue of interest is heart tissue such as the left ventricle of the heart, various techniques can be used to mitigate segmenting non-heart tissue, which may exhibit similar tracer uptake as the heart.

For example, since the heart is generally spatially located nearer the left side of the body, data representative of the right side of the body may be masked or discarded. As such, tissue such as the liver, which may show similar tracer uptake, may be masked or removed prior to performing the segmentation.

Furthermore, *a priori* knowledge of the acquisition can be used to facilitate segmentation. For instance, the position of the object support 132 can be set so that the left ventricle is located generally in a central transaxial slice. A filter, such as a smoothing with a boxcar average filter or another type of filter, can be applied so that a value such as a maximum value of the segmented data generally represents the spatial center of the left ventricle. A window such as a three-dimensional (3D) ellipsoid, sphere, cube, or other shape or other window of other dimension can be used to exclude voxels outside of the window. A local histogram thresholding or other technique can be applied within the remaining region to classify the voxels as belonging or not belonging to the left ventricle.

Once data representing the tissue of interest has been suitably identified, a voxel counter 304 of the alignment metric determining component 138 determines the number of voxels in the segmented tissue. This value can be stored for example in a storage component such as memory as *TotalNumVoxels.* For one or more of the voxels classified as belonging to the segmented tissue in the SPECT data, it is determined whether the attenuation coefficient in the CT map corresponds to segmented tissue. This may be based on a threshold which is calculated from an average attenuation factor for the segmented tissue. The voxel counter 304 then determines the number of voxels belonging to the segmented tissue in CT data. This value can be stored in the storage component as *TotalTissueOfInterestVoxels.*

A metric determiner 306 of the alignment metric determining component 138 determines a metric based on the *TotalNumVoxels* and *TotalHeartVoxels* values. For instance, the metric determiner 306 may compute the metric as a function of Equation 2.

$$\text{Equation 2:} \qquad \frac{(1 - TotalTissueOfInterestVoxels)}{TotalNumVoxels},$$

where (1 - *TotalTissueOfInterestVoxels*) represents the total number of voxels corresponding to tissue other than the tissue of interest. In an alternative embodiment, the metric determiner 306 determines the metric based on pixels.

The clinical metric generating component 206 generates a second metric based on the alignment metric of Equation 2. Such a metric may provide clinically relevant information such an actual or estimated distance between two regions of interest, and as discussed above, may be variously determined, for example, via a look up table, dynamically computed, and/or otherwise.

The decision component 140 behaves substantially as discussed above. For instance, the first and/or the second metric be may presented to facilitate determining whether to perform a registration or a secondary registration. A threshold may be use to facilitate making such a decision. The threshold may be determined using the NURBS-based Cardiac-Torso (NCAT) phantom, by generating different amount of misalignments and verifying the results from known studies.

When it is determined that the data sets are not going to be registered, the combined data can be further processed by the processing component 144.

Otherwise, the combined data is registered via the registration component 142. In the illustrated embodiment, the registration component 142 automatically registers the data. In one instance, the registration includes identifying a voxel deemed as tissue of interest in the SPECT data and deemed as non-tissue of interest in the CT data, and replacing the voxels in the CT data with an average attenuation factor for the tissue of interest. The average may be calculated from other voxels classified as the tissue of interest in the CT data or otherwise. Such voxel replacement can be considered an automatic registration.

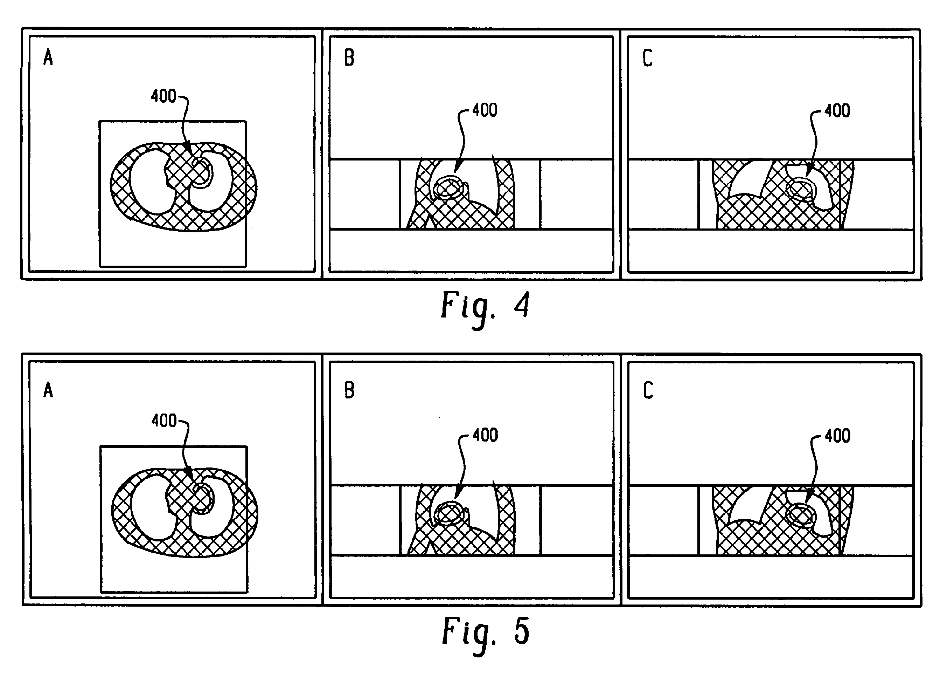

An example of the results of such a registration is shown in FIGURES 4 and 5. Initially referring to FIGURE 4, A, B and C respectively show a transaxial, a sagittal, and a coronal view depicting a region of misalignment 400 between SPECT and CT data in the myocardium. Turning to FIGURE 5, A, B and C respectively show a transaxil, a saggital, and a coronal view after registration in which the CT data in the region 400 is replaced as discussed herein.

After registration, a new metric is determined, and another decision is made as to whether another registration should be performed or not.

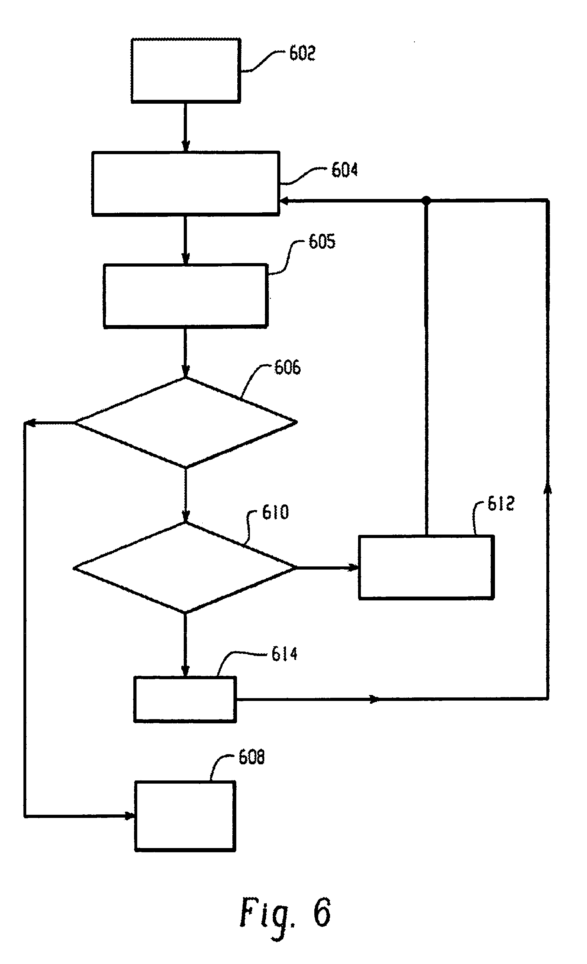

FIGURE 6 illustrates a flow chart for determining whether to register two data sets based on a similarity metric.

At 602, a first data set is combined with a second data set. As discussed herein, the first and second data sets can be data sets from different imaging modalities such as SPECT and CT. The resulting data set may include transforming one of the data sets so that it conforms with the domain space of the other data set.

At 604, a similarity metric is determined based on the combined data set, and at 605, a clinically relevant metric is determined based on the similarity metric, as discussed herein. In other embodiments, act 605 may be omitted. As noted above, the metrics indicate a degree of alignment between information with the data sets in the combined data set.

At 606, it is determined whether one or both of the metrics indicates unacceptable alignment (misalignment). As discussed above, this can be achieved by comparing the metric with a pre-defined threshold or otherwise, including presenting one or both of the metrics to an operator and receiving an input indicative of whether the alignment, based on the metric, is acceptable or unacceptable.

If it is determined that the alignment between the data sets is acceptable, then at 608, the combined data set can be further processed. Otherwise, at 610 it is determined whether an automatic registration is to be performed.

If not, then at 612 the data sets are manually registered. If so, then at 614 the data sets are automatically registered. In either case, flow loops back to act 604 after registration.

It is to be appreciated that the foregoing can be employed with one or more images or views within a data. For instance, with combined data that includes more than one image, the above can be used for each image to determine the quality of the alignment between regions of interest in each image. As such, the clinician would only have to invoke registration with respect to those images associated with a misalignment deemed unacceptable by the clinician. This may improve workflow over an embodiment in which the similarity and/or clinically relevant metric is not used. For instance, when not used, the clinician may have to visually determine on an image-by-image basis whether to invoke registration.

The above may be implemented by way of computer readable instructions, which when executed by a computer processor(s), cause the processor(s) to carry out the described techniques. In such a case, the instructions are stored in a computer readable storage medium associated with or otherwise accessible to the relevant computer. The described techniques need not be performed concurrently with the data acquisition.

Applications of the forgoing and variations thereof include, but are not limited to, hybrid SPECT/CT systems, as well as other medical and non-medical applications such as PET, x-ray, gamma ray, etc. In addition, the combined data may include data from the same imaging modality.

The invention has been described with reference to the preferred embodiments. Modifications and alterations may occur to others upon reading and understanding the preceding detailed description. It is intended that the invention be constructed as including all such modifications and alternations insofar as they come within the scope of the appended claims.

## Claims

1. A method, comprising:

    obtaining a combined data set that includes first and second imaging data sets, wherein the first and second imaging data sets respectively correspond to first and second imaging modalities;
    determining a metric indicative of an alignment between the first and second imaging data sets in the combined data set; and
    presenting the metric in a human readable format, wherein the method further comprises:

    segmenting the first data set, based on tissue of interest, to generate a first segmented region that includes the tissue of interest;
    identifying a first set of voxels, in the segmented data set, that have first values that correspond to the tissue of interest;
    determining a first number of voxels in the first set of voxels;
    identifying a second set of voxels, in the second data set, that correspond to the first voxels;
    determining a second number of voxels in the second set of voxels that have second values that correspond to the tissue of interest; and
    determining the metric based on the first and second number of voxels.

2. The method of claim 1, wherein the metric includes a numerical description indicative of a clinically relevant distance between first and second regions of interest respectively from the first and second imaging data sets.

3. The method of claim 1, further including:

    identifying a first contour for tissue of interest in the first data set; and
    identifying a second contour for the tissue of interest in the second data set,
    wherein the metric is indicative of an alignment between the first and second contours.

4. The method of claim 3, wherein the metric is a Euclidian distance between the first and second contours.

5. The method of claim 1, wherein the metric is determined based on the following:

$$1 - \left( \frac{\text{second number of voxels}}{\text{first number of voxels}} \right).$$

6. The method of claim 1, further including registering the first and second data sets by replacing a voxel that does not have a value that corresponds to the tissue of interest with an average of the values of the voxels that have values that correspond to the tissue of interest.

7. The method of claim 1, further including registering the first and second data sets based on operator input.

8. The method of claim 1, further including comparing the metric with a pre-determined threshold to determine whether the alignment of the first and second data sets is acceptable.

9. The method of claim 1, wherein the first data set is a single photon emission computed tomography data set and the second data set is a computed tomography data set.

10. The method of claim 1, wherein the first imaging data set is re-sampled so as to have at least one of a substantially same voxel size or resolution as the second imaging data set.

11. The method of claim 1, wherein the data in the combined data set are not registered.

12. A system, comprising:

   a data combiner (136) that combines first and second imaging data sets, wherein the first and second imaging data sets respectively correspond to different imaging modalities;
   a metric determining component (138) that determines a metric indicative of an alignment between the first and second imaging data sets in the combined data set; and
   a registration component (142) that registers the first and second imaging data sets when the metric is indicative of an unacceptable alignment between the first and second imaging data sets, wherein the system further comprises:

      a segmentation component (302) that segments the first data set, based on tissue of interest, to generate a first segmented region that includes the tissue of interest; and
      a voxels counter (304) that counts a first number of voxels in a first set of voxels in the segmented data set that have first values that correspond to the tissue of interest and that counts a second number of voxels in a second set of voxels in the second data set that both correspond to the first voxels and have second values that correspond to the tissue of interest;
      wherein the metric is based on the first and second number of voxels.

13. The system of claim 12, wherein the registration includes replacing a voxel that does not have a value that corresponds to the tissue of interest with an average of the values of the corresponding set of voxels that have values that correspond to the tissue of interest.

14. A computer readable storage medium containing instructions which, when executed by a computer, cause the computer to perform the steps of:

   determining a metric indicative of an alignment between first imaging data combined with second imaging data; and
   registering the first and second imaging data when the metric is indicative of an unacceptable alignment between the first and second imaging data sets;
   wherein the instructions, when executed by the computer, further cause the computer to perform the steps of:

      segmenting the first data, based on tissue of interest, to generate a first segmented region that includes the tissue of interest; and
      determining a number of voxels in a first set of voxels in the segmented data set that have first values that correspond to the tissue of interest, and a second number of voxels in a second set of voxels in the second data set that both correspond to the first set of voxels and have second values that correspond to the tissue of interest, wherein the metric is based on the first and second number of voxels in the first and second sets of voxels.

**15.** The computer readable storage medium of claim 14, wherein the instructions, when executed by the computer, further cause the computer to perform the step of:

replacing a value that corresponds to the tissue of interest in the second data with an average of the values of the second voxels that have values that correspond to the tissue of interest.

**Patentansprüche**

**1.** Verfahren, das Folgendes umfasst:

Erfassen eines kombinierten Datensatzes, der erste und zweite Bilddatensätze umfasst, wobei die ersten und zweiten Bilddatensätze jeweils ersten und zweiten bildgebenden Verfahren entsprechen,
Bestimmen einer Metrik, die eine Übereinstimmung zwischen den ersten und zweiten Bilddatensätzen in dem kombinierten Datensatz angeben, und
Zeigen der Metrik in einem menschenlesbaren Format, wobei das Verfahren ferner Folgendes umfasst:

Segmentieren des ersten Datensatzes auf der Grundlage von interessierendem Gewebe, um eine erste segmentierte Region zu erzeugen, die das interessierende Gewebe einschließt,
Identifizieren in dem segmentierten Datensatz eines ersten Satzes mit Voxeln, die erste Werte haben, die dem interessierenden Gewebe entsprechen,
Bestimmen einer ersten Anzahl von Voxeln in dem ersten Satz mit Voxeln,
Identifizieren in dem zweiten Datensatz eines zweiten Satzes mit Voxeln, die den ersten Voxeln entsprechen,
Bestimmen in dem zweiten Satz mit Voxeln einer zweiten Anzahl von Voxeln, die zweite Werte haben, die dem interessierenden Gewebe entsprechen, und
Bestimmen der Metrik auf der Grundlage der ersten und der zweiten Anzahl von Voxeln.

**2.** Verfahren nach Anspruch 1, wobei die Metrik eine numerische Beschreibung umfasst, die jeweils ausgehend von den ersten und zweiten Bilddatensätzen einen klinisch relevanten Abstand zwischen ersten und zweiten interessierenden Regionen angeben.

**3.** Verfahren nach Anspruch 1, das ferner Folgendes umfasst:

Identifizieren einer ersten Kontur für interessierendes Gewebe in dem ersten Datensatz und
Identifizieren einer zweiten Kontur für das interessierende Gewebe in dem zweiten Datensatz,
wobei die Metrik eine Übereinstimmung zwischen der ersten und der zweiten Kontur angibt.

**4.** Verfahren nach Anspruch 3, wobei die Metrik ein Euklidischer Abstand zwischen der ersten und der zweiten Kontur ist.

**5.** Verfahren nach Anspruch 1, wobei die Metrik auf der Grundlage der folgenden Formel bestimmt wird:

$$1 - \left( \frac{\text{zweite Anzahl von Voxeln}}{\text{erste Anzahl von Voxeln}} \right).$$

**6.** Verfahren nach Anspruch 1, das die Registrierung der ersten und zweiten Datensätze durch das Ersetzen eines Voxels umfasst, das keinen Wert hat, der dem interessierenden Gewebe entspricht, durch einen Durchschnitt der Werte der Voxel mit Werten, die dem interessierenden Gewebe entsprechen.

**7.** Verfahren nach Anspruch 1, das ferner die Registrierung der ersten und zweiten Datensätze auf der Grundlage einer Bedienereingabe umfasst.

8. Verfahren nach Anspruch 1, das ferner den Vergleich der Metrik mit einem vorbestimmten Schwellenwert umfasst um zu bestimmen, ob die Übereinstimmung der ersten und zweiten Datensätze annehmbar ist.

9. Verfahren nach Anspruch 1, wobei der erste Datensatz ein durch Einzelphotonen-Emissionscomputertomographie erzielter Datensatz ist.

10. Verfahren nach Anspruch 1, wobei der erste Bilddatensatz erneut abgetastet wird, um mindestens entweder eine im Wesentliche gleiche Voxelgröße oder Auflösung wie der zweite Bilddatensatz zu erzielen.

11. Verfahren nach Anspruch 1, wobei die Daten in dem kombinierten Datensatz nicht registriert werden.

12. System, das Folgendes umfasst:

einen Datenkombinierer (136), der erste und zweiten Bilddatensätze kombiniert, wobei die ersten und zweiten Bilddatensätze jeweils unterschiedlichen bildgebenden Verfahren entsprechen,
eine eine Metrik bestimmende Komponente (138), die eine Metrik bestimmt, die eine Übereinstimmung zwischen den ersten und zweiten Bilddatensätzen in dem kombinierten Datensatz angibt, und
eine Registrierungskomponente (142), die die ersten und zweiten Bilddatensätze registriert, wenn die Metrik eine nicht annehmbare Übereinstimmung zwischen den ersten und zweiten Bilddatensätzen angibt, wobei das System ferner Folgendes umfasst:

eine Segmentierungskomponente (302), die den ersten Datensatz auf der Grundlage von interessierendem Gewebe segmentiert, um eine erste segmentierte Region zu erzeugen, die das interessierende Gewebe einschließt, und
einen Voxelzähler (304), der in einem ersten Satz mit Voxeln in dem segmentierten Datensatz eine erste Anzahl von Voxeln zählt, die erste Werte haben, die dem interessierenden Gewebe entsprechen, und der in einem zweiten Satz mit Voxeln in dem zweiten Datensatz eine zweite Anzahl von Voxeln zählt, die sowohl den ersten Voxeln entsprechen als auch zweite Werte haben, die dem interessierenden Gewebe entsprechen,
wobei die Metrik auf der ersten und der zweiten Anzahl von Voxeln basiert.

13. System nach Anspruch 12, wobei die Registrierung das Ersetzen eines Voxels umfasst, das keinen Wert hat, der dem interessierenden Gewebe entspricht, durch einen Durchschnitt der Werte des entsprechenden Satzes mit Voxeln mit Werten, die dem interessierenden Gewebe entsprechen.

14. Computerlesbares Speichermedium, das Befehle enthält, die bei Ausführung auf einem Computer den Computer veranlassen, die folgenden Schritte durchzuführen:

Bestimmen einer Metrik, die eine Übereinstimmung zwischen ersten Bilddaten kombiniert mit zweiten Bilddaten angeben, und
Registrieren der ersten und zweiten Bilddaten, wenn die Metrik eine nicht annehmbare Übereinstimmung zwischen den ersten und zweiten Bilddatensätzen angibt,
wobei die Befehle bei Ausführung auf dem Computer den Computer ferner veranlassen, die folgenden Schritte durchzuführen:

Segmentieren der ersten Daten auf der Grundlage von interessierendem Gewebe, um eine erste segmentierte Region zu erzeugen, die das interessierende Gewebe einschließt,
Bestimmen in einem ersten Satz mit Voxeln in dem segmentierten Datensatz einer Anzahl von Voxeln mit ersten Werten, die dem interessierenden Gewebe entsprechen, und in dem zweiten Satz mit Voxeln in dem zweiten Datensatz einer zweiten Anzahl von Voxeln, die sowohl dem ersten Satz mit Voxeln entsprechen als auch zweite Werte haben, die dem interessierenden Gewebe entsprechen, wobei die Metrik auf der ersten und der zweiten Anzahl von Voxeln in dem ersten und dem zweiten Satz mit Voxeln basiert.

15. Computerlesbares Speichermedium nach Anspruch 14, wobei die Befehle bei Ausführung auf dem Computer den Computer ferner veranlassen, den folgenden Schritt auszuführen:

Ersetzen eines Wertes, der dem interessierenden Gewebe entspricht, in den zweiten Daten durch einen Durchschnitt der Werte der zweiten Voxel mit Werten, die dem interessierenden Gewebe entsprechen.

**Revendications**

1. Procédé, comprenant :

   l'obtention d'un ensemble de données combinées qui comprend des premier et deuxième ensembles de données d'imagerie, dans lequel les premier et deuxième ensembles de données d'imagerie correspondent respectivement à des première et deuxième modalités d'imagerie ;
   la détermination d'une métrique indicative d'un alignement entre les premier et deuxième ensembles de données d'imagerie dans l'ensemble de données combinées ; et
   la présentation de la métrique dans un format lisible par l'être humain, dans lequel le procédé comprend en outre :

   la segmentation du premier ensemble de données, sur la base d'un tissu d'intérêt, pour générer une première région segmentée qui comprend le tissu d'intérêt ;
   l'identification d'un premier ensemble de voxels, dans l'ensemble de données segmenté, ayant des premières valeurs qui correspondent au tissu d'intérêt ;
   la détermination d'un premier nombre de voxels dans le premier ensemble de voxels ;
   l'identification d'un deuxième ensemble de voxels, dans le deuxième ensemble de données, qui correspond aux premiers voxels ;
   la détermination d'un deuxième nombre de voxels dans le deuxième ensemble de voxels ayant des deuxièmes valeurs qui correspondent au tissu d'intérêt ; et
   la détermination de la métrique sur la base du premier nombre de voxels et du deuxième nombre de voxels.

2. Procédé selon la revendication 1, dans lequel la métrique comprend une description numérique indicative d'une distance pertinente cliniquement entre des première et deuxième régions d'intérêt respectivement des premier et deuxième ensembles de données d'imagerie.

3. Procédé selon la revendication 1, comprenant en outre :

   l'identification d'un premier contour du tissu d'intérêt dans le premier ensemble de données ; et
   l'identification d'un deuxième contour du tissu d'intérêt dans le deuxième ensemble de données,
   dans lequel la métrique est indicative d'un alignement entre les premier et deuxième contours.

4. Procédé selon la revendication 3, dans lequel la métrique est une distance euclidienne entre les premier et deuxième contours.

5. Procédé selon la revendication 1, dans lequel la métrique est déterminée sur la base de ce qui suit :

$$1 - \left( \frac{\textit{deuxième nombre de voxels}}{\textit{premier nombre de voxels}} \right).$$

6. Procédé selon la revendication 1, comprenant en outre la superposition des premier et deuxième ensembles de données en remplaçant un voxel qui n'a pas une valeur correspondant au tissu d'intérêt par une moyenne des valeurs des voxels qui ont des valeurs correspondant au tissu d'intérêt.

7. Procédé selon la revendication 1, comprenant en outre la superposition des premier et deuxième ensembles de données sur la base d'une entrée d'opérateur.

8. Procédé selon la revendication 1, comprenant en outre la comparaison de la métrique à un seuil prédéterminé pour déterminer si l'alignement des premier et deuxième ensembles de données est acceptable.

9. Procédé selon la revendication 1, dans lequel le premier ensemble de données est un ensemble de données de tomodensitométrie par émission monophotonique et le deuxième ensemble de données est un ensemble de données de tomodensitométrie.

10. Procédé selon la revendication 1, dans lequel le premier ensemble de données d'imagerie est rééchantillonné pour avoir au moins l'une d'une taille ou d'une résolution de voxels sensiblement identique à celle du deuxième ensemble de données d'imagerie.

11. Procédé selon la revendication 1, dans lequel les données dans l'ensemble de données combinées ne sont pas superposées.

12. Système, comprenant :

un combinateur de données (136) qui combine les premier et deuxième ensembles de données d'imagerie, dans lequel les premier et deuxième ensembles de données d'imagerie correspondent respectivement à différentes modalités d'imagerie ;
un composant de détermination de métrique (138) qui détermine une métrique indicative d'un alignement entre les premier et deuxième ensembles de données d'imagerie dans l'ensemble de données combinées ; et
un composant de superposition (142) qui superpose les premier et deuxième ensembles de données d'imagerie lorsque la métrique est indicative d'un alignement inacceptable entre les premier et deuxième ensembles de données d'imagerie, dans lequel le système comprend en outre :

un composant de segmentation (302) qui segmente le premier ensemble de données, sur la base d'un tissu d'intérêt, pour générer une première région segmentée qui comprend le tissu d'intérêt ; et
un compteur de voxels (304) qui compte un premier nombre de voxels dans un premier ensemble de voxels dans l'ensemble de données segmenté ayant des premières valeurs correspondant au tissu d'intérêt et qui compte un deuxième nombre de voxels dans un deuxième ensemble de voxels dans le deuxième ensemble de données qui correspondent tous les deux aux premiers voxels et ayant des deuxièmes valeurs correspondant au tissu d'intérêt ;
dans lequel la métrique est basée sur le premier nombre de voxels et sur le deuxième nombre de voxels.

13. Système selon la revendication 12, dans lequel la superposition comprend le remplacement d'un voxel qui n'a pas une valeur correspondant au tissu d'intérêt par une moyenne des valeurs de l'ensemble correspondant de voxels ayant des valeurs correspondant au tissu d'intérêt.

14. Support de stockage lisible par ordinateur contenant des instructions qui, lorsqu'elles sont exécutées par un ordinateur, amènent l'ordinateur à effectuer les étapes de :

la détermination d'une métrique indicative d'un alignement entre des premières données d'imagerie combinées à des deuxièmes données d'imagerie ; et
la superposition des premières et deuxièmes données d'imagerie lorsque la métrique est indicative d'un alignement inacceptable entre les premier et deuxième ensembles de données d'imagerie ;
dans lequel les instructions, lorsqu'elles sont exécutées par l'ordinateur, amènent en outre l'ordinateur à effectuer les étapes de :

la segmentation des premières données, sur la base d'un tissu d'intérêt, pour générer une première région segmentée qui comprend le tissu d'intérêt ; et
la détermination d'un premier nombre de voxels dans un premier ensemble de voxels dans l'ensemble de données segmenté ayant des premières valeurs correspondant au tissu d'intérêt et d'un deuxième nombre de voxels dans un deuxième ensemble de voxels dans le deuxième ensemble de données qui correspondent tous les deux au premier ensemble de voxels et ayant des deuxièmes valeurs correspondant au tissu d'intérêt, dans lequel la métrique est basée sur le premier nombre de voxels et sur le deuxième nombre de voxels dans les premier et deuxième ensembles de voxels.

15. Support de stockage lisible par ordinateur selon la revendication 14, dans lequel les instructions, lorsqu'elles sont exécutées par l'ordinateur, amènent en outre l'ordinateur à effectuer l'étape de :

le remplacement d'une valeur correspondant au tissu d'intérêt dans les deuxièmes données par une moyenne des valeurs des deuxièmes voxels ayant des valeurs correspondant au tissu d'intérêt.

*Fig. 1*

Fig. 2

Fig. 3

Fig. 4

Fig. 5

EP 2 245 592 B1

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KESSLER M.L.** Image registration and data fusion in radiation therapy. *THE BRITISH JOURNAL OF RADIOLOGY,* 2006, vol. 79, ISSN 0167-8140, S99-S108